# DEMANDE DE BREVET EUROPEEN

(11) **EP 1 826 748 A1**
(43) Date de publication de la demande: **29.08.2007**
(21) Numéro de dépôt: 07290220.8
(22) Date de dépôt: 21.02.2007
(51) Int. Cl.: G09G 5/12

(54) **Dispositif d'affichage**

(30) Priorité: 28.02.2006 FR 0601796
(71) Demandeur: Naotek, 44470 Carquefou (FR)
(72) Inventeur: Lavolee, Bruno, 44300 Nantes (FR); Guillon, Laurent, 44980 Sainte Luce sur Loire (FR)
(74) Mandataire: Laget, Jean-Loup

(57) **Abrégé**

Dispositif d'affichage (1) comportant au moins deux modules d'affichage autonomes (2, 3, 4, 5), chaque module d'affichage comportant une zone d'affichage (6, 7, 8, 9) comprenant une pluralité d'éléments lumineux (10) et un microprocesseur apte à commander un affichage séquentiel sur ladite zone d'affichage dudit module d'affichage (2, 3, 4, 5) en fonction d'un programme d'animation mémorisé dans ledit microprocesseur, caractérisé en ce que l'un desdits modules d'affichage, dit module maître (2), est apte à émettre une donnée de synchronisation à destination de l'autre desdits modules d'affichage, dit module esclave (3, 4, 5), et, lorsque ledit module esclave reçoit ladite donnée de synchronisation, le microprocesseur dudit module esclave commande le démarrage d'une séquence partielle d'animation dudit module esclave.

## Description

La présente invention a pour objet un dispositif d'affichage comportant au moins deux modules d'affichage autonomes.

Des dispositifs d'affichage comportant plusieurs modules d'affichage sont généralement utilisés pour réaliser l'affichage d'animations graphiques sur des enseignes lumineuses, par exemple de pharmacies.

Les modules d'affichage connus peuvent être commandés ou autonomes. Les modules d'affichage commandés sont commandés par une carte de commande externe et n'ont en charge que de réaliser l'affichage d'animations. Les modules d'affichage autonomes ne nécessitent pour fonctionner qu'une source d'alimentation en énergie. Les modules d'affichage autonomes comportent un microprocesseur contenant un programme d'animation permettant de commander l'affichage séquentiel d'animations sur le module d'affichage.

Dans le cas de modules autonomes, la disparité du temps d'exécution des modules d'affichage et la dérive de la base de temps, du fait notamment des tolérances des composants gérant la base de temps, peut entraîner une désynchronisation du cycle d'animation d'un module d'affichage à l'autre. Cela se traduit notamment par une détérioration visuelle des animations.

La présente invention a pour but de proposer un dispositif d'affichage permettant de réaliser un affichage global sur un ensemble de modules d'affichage autonomes en évitant notamment une désynchronisation des modules d'affichage les uns par rapport aux autres.

A cet effet, l'invention a pour objet un dispositif d'affichage comportant au moins deux modules d'affichage autonomes, chaque module d'affichage comportant une zone d'affichage comprenant une pluralité d'éléments lumineux et un composant électronique programmable apte à commander un affichage séquentiel sur ladite zone d'affichage dudit module d'affichage en fonction d'un programme d'animation mémorisé dans ledit composant électronique programmable, caractérisé en ce que l'un desdits modules d'affichage, dit module maître, est apte à émettre une donnée de synchronisation à destination de l'autre desdits modules d'affichage, dit module esclave, et, lorsque ledit module esclave reçoit ladite donnée de synchronisation, le composant électronique programmable dudit module esclave commande le démarrage d'une séquence partielle d'animation dudit module esclave.

Selon un mode de réalisation de l'invention, le dispositif d'affichage comporte plusieurs modules esclaves, ledit module maître étant apte à émettre une donnée de synchronisation à destination de chacun desdits modules esclaves.

De préférence, chaque composant électronique programmable comporte un programme d'animation comportant la description complète des animations dudit dispositif d'affichage, chaque module d'affichage étant identifié par un paramètre d'identification permettant au composant électronique programmable dudit module d'affichage de sélectionner la partie du programme d'animation qu'il doit exécuter.

Avantageusement, ledit paramètre d'identification est mémorisé comme constante dans ledit programme d'animation de chacun desdits modules d'affichage.

Selon un mode de réalisation de l'invention, lesdits modules d'affichage sont connectés entre eux par un bus de communication permettant la transmission et la réception de ladite donnée de synchronisation.

De préférence, ledit module maître transmet une donnée de synchronisation avant le début de l'exécution dudit programme d'animation par le composant électronique programmable dudit module maître.

Avantageusement, l'affichage sur chacune desdites zones d'affichage forme un affichage global cognitif.

Avantageusement, lesdits éléments lumineux comprennent des diodes électroluminescentes.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.
Sur ces dessins :
- la figure 1 est une vue schématique simplifiée de l'avant d'un dispositif d'affichage selon un mode de réalisation de l'invention ;
- la figure 2 est une vue schématique simplifiée montrant les connexions entre les modules d'affichage du dispositif d'affichage de la figure 1 ; et
- la figure 3 est un schéma fonctionnel représentant les étapes d'un procédé d'affichage permettant de réaliser un affichage séquentiel sur le dispositif d'affichage de la figure 1.

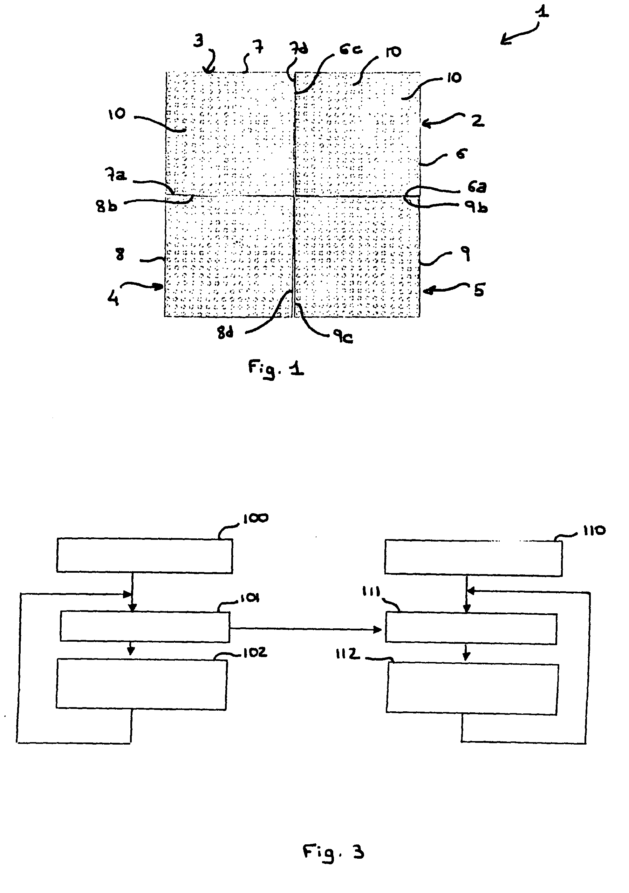

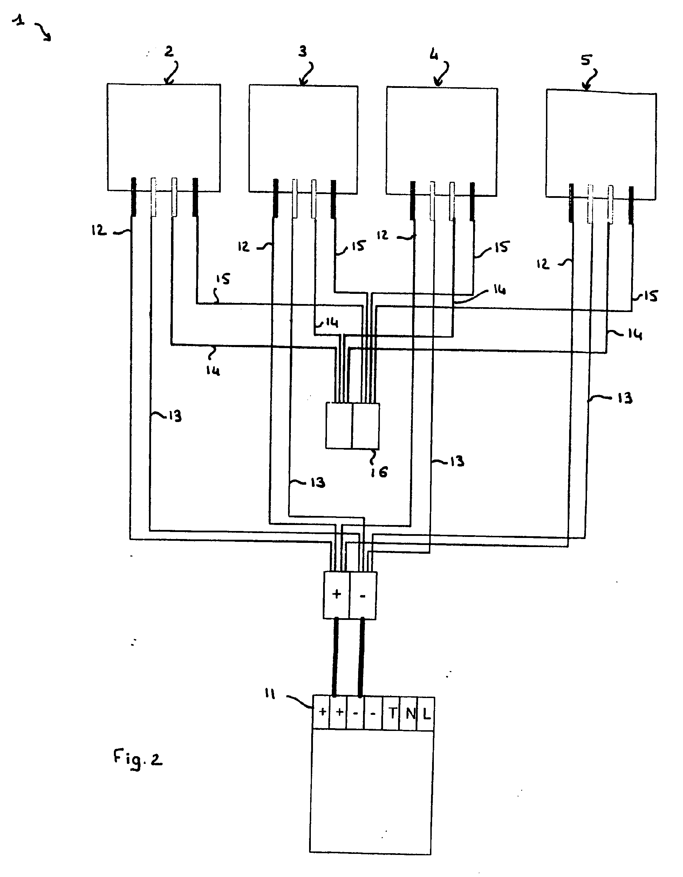

En se référant aux figures 1 et 2, on voit un dispositif d'affichage 1 comportant quatre modules d'affichage 2, 3, 4 et 5. Chaque module d'affichage 2, 3, 4 et 5 comporte une zone d'affichage 6, 7, 8 et 9, respectivement. Chaque zone d'affichage 6, 7, 8, 9 est par exemple rectangulaire. Le bord inférieur 6a de la zone d'affichage 6 est par exemple disposé le long du bord supérieur 9b de la zone d'affichage 9, le bord gauche 9c de la zone d'affichage 9 étant disposé le long du bord droit 8d de la zone d'affichage 8, le bord supérieur 8b de la zone d'affichage 8 étant disposé le long du bord inférieur 7a de la zone d'affichage 7, le bord droit 7d de la zone d'affichage 7 étant disposé le long du bord gauche 6c de la zone d'affichage 6. L'ensemble des zones d'affichage 6, 7, 8 et 9 constitue un écran d'affichage, qui est rectangulaire dans l'exemple représenté sur la figure 1. On notera que sur la figure 2, qui montre les connexions entre les différents éléments du dispositif d'affichage 1, les modules 2, 3, 4 et 5 n'ont pas été représentés positionnés par souci de clarté.

Chaque zone d'affichage 6, 7, 8 et 9 comporte une pluralité d'éléments lumineux 10, par exemple des diodes électroluminescentes (DEL).

Chaque module 2, 3, 4 et 5 comporte un composant électronique programmable, par exemple un microprocesseur (non représenté). Le microprocesseur du module 2 (respectivement 3, 4, 5) est destiné à commander de manière séquentielle l'allumage de chacun des éléments lumineux 10 du module 2 (respectivement 3, 4, 5). La séquence est définie par un programme d'animation mémorisé dans le microprocesseur du module 2 (respectivement 3, 4, 5). Le programme d'animation du microprocesseur du module 2 (respectivement 3, 4, 5) contient la description complète des animations sur la totalité du dispositif d'affichage 1, c'est-à-dire sur l'ensemble des zones d'affichage 6, 7, 8 et 9.

Un paramètre d'identification est attribué à chaque module 2, 3, 4 et 5 et mémorisé comme constante dans le programme d'animation correspondant. Le terme constante doit être interprété ici comme une valeur prédéfinie qui est mémorisée dans le programme d'animation lors de la configuration du dispositif d'affichage 1 et qui est utilisée par le programme d'animation pour l'exécution des commandes. Les programmes d'animation des différents modules 2, 3, 4, 5 diffèrent uniquement par la valeur du paramètre d'identification. Le paramètre d'identification associé au module 2 (respectivement 3, 4, 5) permet de définir la partie du programme d'animation que le microprocesseur du module 2 (respectivement 3, 4, 5) doit exécuter pour que la zone d'affichage 6 (respectivement 7, 8, 9) affiche une animation prédéterminée. En d'autres termes, chaque module 2, 3, 4 et 5 contient l'ensemble du programme d'animation du dispositif d'affichage 1 mais ne réalise l'affichage que de la partie de l'animation qui le concerne. De préférence, les animations des zones d'affichage 6, 7, 8 et 9 forment une animation globale, c'est-à-dire qu'à chaque instant le dispositif d'affichage 1 affiche une image cognitive s'étendant sur les zones d'affichage 6, 7, 8 et 9.

Dans la suite de la description, on appelle séquence partielle d'animation du module 2 (respectivement 3, 4, 5) la partie de la séquence d'animation du dispositif d'affichage 1 affichée sur la zone d'affichage 6 (respectivement 7, 8, 9). On considère que le début de la séquence partielle d'animation du module 2 (respectivement 3, 4, 5) correspond au début de la séquence d'animation. On notera qu'une séquence partielle d'animation d'un module peut commencer avant qu'un affichage apparaisse sur la zone d'affichage correspondante.

Chaque module 2, 3, 4 et 5 est connecté à une source d'alimentation 11 par deux fils 12 et 13. Chaque module 2, 3, 4 et 5 comporte deux fils de communication 14 et 15. Les fils de communication 14, 15 des modules 2, 3, 4, 5 sont connectés entre eux au niveau d'un boîtier 16, de manière à former un bus de communication.

Un module du dispositif d'affichage 1, par exemple le module 2, est désigné comme module maître. Les autres modules du dispositif d'affichage 1, dans l'exemple les modules 3, 4 et 5, sont désignés comme modules esclaves.

En se référant à la figure 3, on va maintenant décrire les étapes du procédé d'affichage permettant de réaliser un affichage séquentiel sur le dispositif d'affichage 1.

Les étapes 100 à 102 sont les étapes du procédé d'affichage réalisées par le microprocesseur du module maître 2.

Lorsque le dispositif d'affichage 1 est alimenté en énergie par la source d'alimentation 11, le microprocesseur du module maître 2 effectue l'étape 100. L'étape 100 est une étape d'initialisation.

A l'étape 101, le microprocesseur du module maître 2 émet sur le bus de communication une donnée de synchronisation à destination des modules esclaves 3, 4, 5. Lorsque l'étape 101 a été effectuée, le procédé passe à l'étape 102.

A l'étape 102, le microprocesseur du module maître 2 commande le démarrage de la séquence partielle d'animation du module 2. En d'autres termes, le microprocesseur du module maître 2 exécute une partie du programme d'animation, la partie étant déterminée par le paramètre d'identification associé au module 2. L'exécution du programme d'animation a pour effet l'allumage séquentiel de diodes 10 de la zone d'affichage 6. Lorsque l'étape 102 a été effectuée, c'est-à-dire lorsque le microprocesseur du module maître 2 a terminé l'exécution de sa partie du programme d'animation, le procédé passe à l'étape 101.

A l'étape 101, le microprocesseur du module maître 2 émet une donnée de synchronisation à destination des modules esclaves 3, 4, 5. Les étapes 101 et 102 sont ainsi effectuées en boucle tant que le dispositif d'affichage 1 est alimenté en énergie.

Les étapes 110 à 112 sont les étapes du procédé d'affichage réalisées par chacun des microprocesseurs des modules esclaves 3, 4 et 5.

Lorsque le dispositif d'affichage 1 est alimenté en énergie par la source d'alimentation 11, le microprocesseur du module esclave 3 (respectivement 4, 5) effectue l'étape 110. L'étape 110 est une étape d'initialisation.

A l'étape 111, le microprocesseur du module esclave 3 (respectivement 4, 5) se met en attente d'une donnée de synchronisation provenant du module maître 2. Lorsque le module esclave 3 (respectivement 4, 5) a reçu la donnée de synchronisation émise par le module maître 2 à l'étape 101, le procédé passe à l'étape 112.

A l'étape 112, le microprocesseur du module esclave 3 (respectivement 4, 5) commande le démarrage de la séquence partielle d'animation du module 3 (respectivement 4, 5). En d'autres termes, le microprocesseur du module esclave 3 (respectivement 4, 5) exécute une partie du programme d'animation, la partie étant déterminée par le paramètre d'identification associé au module 3 (respectivement 4, 5). L'exécution du programme d'animation a pour effet l'allumage séquentiel de diodes 10 de la zone d'affichage 7 (respectivement 8, 9).

Lorsque l'étape 112 a été effectuée, c'est-à-dire lorsque le microprocesseur du module esclave 3 (respectivement 4, 5) a terminé l'exécution de sa partie du programme d'animation, le procédé passe à l'étape 111.

A l'étape 111, le microprocesseur du module esclave 3 (respectivement 4, 5) se met en attente d'une donnée de synchronisation provenant du module maître 2. Les étapes 111 et 112 sont ainsi effectuées en boucle tant que le dispositif d'affichage 1 est alimenté en énergie.

Lorsque les modules 2, 3, 4 et 5 sont correctement synchronisés, l'étape 102 effectuée par le microprocesseur du module maître 2 et les étapes 112 effectuées par les microprocesseurs des modules esclaves 3, 4 et 5, respectivement, sont effectuées simultanément. Dans ce cas, les modules 2, 3, 4 et 5 terminent l'exécution de leur séquence partielle d'animation respective en même temps, c'est-à-dire que l'instant auquel le microprocesseur du module maître 2 passe à l'étape 101 et émet une donnée de synchronisation correspond à l'instant où le microprocesseur de chaque module esclave 3, 4, 5 passe à l'étape 111.

En pratique, la disparité du temps d'exécution de chaque module 2, 3, 4, 5 et la dérive de la base de temps, du fait notamment des tolérances des composants gérant la base de temps, peut entraîner une désynchronisation du cycle d'animations d'un module à l'autre. En l'absence de re-synchronisation, cela se traduit notamment par une détérioration visuelle des animations.

Avec le procédé d'affichage décrit précédemment, lorsqu'un module esclave 3, 4 ou 5 est en avance par rapport au module maître 2, le module esclave attend la fin de l'exécution du programme d'animation par le module maître 2. Cela a pour effet que le module esclave 3, 4 ou 5 et le module maître 2 sont de nouveau synchronisés lors de l'exécution suivante de leur séquence partielle d'animation respective. Lorsqu'un module esclave 3, 4 ou 5 est en retard par rapport au module maître 2, la réception d'une donnée de synchronisation est prioritaire, c'est-à-dire que, dans ce cas, le microprocesseur du module esclave 3, 4 ou 5 redémarre sa séquence partielle d'animation respective. Cela a pour effet que le module esclave 3, 4 ou 5 et le module maître 2 sont de nouveau synchronisés lors de l'exécution suivante leur séquence partielle d'animation respective. Les modules 2, 3, 4 et 5 sont ainsi synchronisés les uns par rapport aux autres à chaque séquence d'animation.

D'autres variantes sont possibles. Par exemple, le nombre de modules constituant le dispositif d'affichage n'est pas limitatif, de même que leur disposition les uns par rapport aux autres.

Les éléments lumineux utilisés peuvent être divers.

Bien que l'invention ait été décrite en relation avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Dispositif d'affichage (1) comportant au moins deux modules d'affichage autonomes (2, 3, 4, 5), chaque module d'affichage comportant une zone d'affichage (6, 7, 8, 9) comprenant une pluralité d'éléments lumineux (10) et un composant électronique programmable apte à commander un affichage séquentiel sur ladite zone d'affichage dudit module d'affichage (2, 3, 4, 5) en fonction d'un programme d'animation mémorisé dans ledit composant électronique programmable, **caractérisé en ce que** l'un desdits modules d'affichage, dit module maître (2), est apte à émettre une donnée de synchronisation à destination de l'autre desdits modules d'affichage, dit module esclave (3, 4, 5), et, lorsque ledit module esclave reçoit ladite donnée de synchronisation, le composant électronique programmable dudit module esclave commande le démarrage d'une séquence partielle d'animation dudit module esclave.

2. Dispositif d'affichage selon la revendication 1, **caractérisé en ce qu'**il comporte plusieurs modules esclaves (3, 4, 5), ledit module maître (2) étant apte à émettre une donnée de synchronisation à destination de chacun desdits modules esclaves.

3. Dispositif d'affichage selon la revendication 1 ou 2, **caractérisé en ce que** chaque composant électronique programmable comporte un programme d'animation comportant la description complète des animations dudit dispositif d'affichage (1), chaque module d'affichage (2, 3, 4, 5) étant identifié par un paramètre d'identification permettant au composant électronique programmable dudit module d'affichage de sélectionner la partie du programme d'animation qu'il doit exécuter.

4. Dispositif d'affichage selon la revendication 3, **caractérisé en ce que** ledit paramètre d'identification est mémorisé comme constante dans ledit programme d'animation de chacun desdits modules d'affichage (2, 3, 4, 5).

5. Dispositif d'affichage selon l'une quelconque des revendications 1 à 4, **caractérisé en ce que** lesdits modules d'affichage (2, 3, 4, 5) sont connectés entre eux par un bus de communication permettant la transmission et la réception de ladite donnée de synchronisation.

6. Dispositif d'affichage selon l'une quelconque des revendications 1 à 5, **caractérisé en ce que** ledit module maître (2) transmet une donnée de synchronisation avant le début de l'exécution dudit programme d'animation par le composant électronique programmable dudit module maître.

7. Dispositif d'affichage selon l'une quelconque des revendications 1 à 6, **caractérisé en ce que** l'affichage sur chacune desdites zones d'affichage (6, 7, 8, 9) forme un affichage global cognitif.

8. Dispositif d'affichage selon l'une quelconque des revendications 1 à 7, **caractérisé en ce que** lesdits éléments lumineux comprennent des diodes électroluminescentes.
